# EUROPEAN PATENT APPLICATION

(11) **EP 1 953 429 A1**
(43) Date of publication of application: **06.08.2008**
(21) Application number: 07101603.4
(22) Date of filing: 01.02.2007
(51) Int. Cl.: F16K 1/30, F16K 31/44

(54) **Gas valve assembly with integrated pressure reducer**

(71) Applicant: LUXEMBOURG PATENT COMPANY S.A., 7440 Lintgen (LU)
(72) Inventor: Heinrich, Sylvain, 57970, Yutz (FR); Lardenais, Philippe, 8147, Bridel (LU)
(74) Representative: Lecomte, Didier

(57) **Abstract**

The present invention is directed to a gas valve assembly with an integrated pressure reducer, optionally also with a flow selector and/or with an integrated pressure relief valve and/or a residual pressure valve. The pressure reducer 8, and optionally the pressure relief valve 21 and/or the residual pressure valve 22, is (are) integrated in a sub assembly 5 which is slidingly engaged in a longitudinal cavity 2 in the valve body 1. This sub assembly 5 has an inlet 6 and an outlet 7. A shut-off valve is fluidly interposed between the gas valve inlet 4 and the sub assembly inlet 6. Operating means are foreseen to longitudinally move the sub assembly 5 within the cavity 2 for actuating the gas shut-off valve 10. Means 15 are provided for separating the cavity 2 in a first chamber 16 and an adjacent second chamber 17 isolated from the first chamber 16 in a sealed way and such that the sub assembly outlet 7 flows in the second chamber 17. The valve outlet 9 is provided on the valve body 1 in communication with the second chamber 17.

## Description

### Technical Field

The present invention is directed to a gas valve assembly with an integrated pressure reducer, optionally also with a flow selector and/or with an integrated pressure relief valve and/or a residual pressure valve.

### Background Art

It is known from US 5,566,713 to integrate a pressure reducer, a pressure relief valve and a flow selector in a gas valve assembly. The integration is interesting with regard to different aspects like the compactness and the design but the known design has the following drawbacks:

The pressure relief valve is not fully integrated since it laterally protrudes from the valve body. Additionally, this protrusion is essential for operating the valve since it converts the rotational movement when manually operating the valve into a downward movement for opening the valve.

The opening or closing of the valve is operated by turning a hand wheel whereas the flow selection is operated by turning an actuation web distinct from the hand wheel. The integration is also there partial.

The design is such that the pressure reducer, the pressure relief valve and the flow selector are arranged in a unit. The hand wheel when operated has for effect to displace the unit in order to open or close the main reverse valve seat. This has for consequences that the gas outlet and the actuation web of the flow selector move also with the unit.

Consequently, the design of US 5,566,713 is quite complicated and expensive in production.

### Disclosure of Invention

The present invention seeks to provide an improved integration of a pressure reducer in a gas valve assembly in order to overcome at least some of the drawbacks mentioned here above.

The invention consists in providing a gas valve assembly comprising
- a valve body with a cavity extending along a longitudinal axis of the valve body,
- a valve inlet on the valve body,
- a hollow sub assembly located in the cavity and able to move along the longitudinal axis, the sub assembly being provided with an inlet and an outlet and comprising a pressure reducer in communication with the sub assembly inlet and outlet,
- a valve outlet in communication with the sub assembly outlet,
- a gas shut-off valve fluidly interposed between the valve inlet and the sub assembly inlet, the gas shut-off valve being operated by the movement of the sub assembly,
- valve operating means able to move the sub assembly for operating the gas shut-off valve,
characterised in that the gas valve assembly further comprises
means for dividing the cavity in a first chamber and an adjacent second chamber isolated from the first chamber in a sealed way and such that the sub assembly outlet flows in the second chamber, and
the valve outlet is provided on the valve body in communication with the second chamber.

This construction is a great improvement with regard to the compactness and construction simplicity compared to the integration solution disclosed in the prior art.

Preferably the sub assembly is provided with a first element of the gas shut-off valve which during operating is able to come into sealed contact with a second element of the gas shut-off valve for thereby shutting off valve.

Preferably the first element is a sealing element and the second element is a valve seat or vice versa.

Preferably the sub assembly comprises a protrusion at its lower end along the longitudinal axis which engages the cavity of the valve body and, preferably, at the end of which the first element of the shut-off valve is provided.

Preferably the sub assembly contains a pressure relief valve.

In a preferred embodiment, the pressure reducer comprises a piston including a piston head and a piston rod, the piston head being in sealing engagement with interior of the sub assembly, the piston rod having a conduit in communication with the opposite side of the piston, the end of the piston rod opposite to the piston being provided with a regulator seat for sealing the sub assembly inlet; the pressure relief valve comprises a member with a sleeve in sealing engagement with the piston rod; and spring means acting between the piston and the pressure relief valve.

Preferably the sub assembly contains a residual pressure valve arranged in series and upstream of the pressure reducer.

In a preferred embodiment the gas valve assembly further comprises a flow adjusting means arranged in the second chamber for adjusting the gas flow at the gas valve outlet.

Preferably the flow adjusting means are operated by the valve operating means operating the gas shut-off valve.

In a preferred embodiment, the flow adjusting means comprise a plate, preferably in the form of a disk or a ring, perforated with several openings of different sizes and displaceable with regard to an outlet aperture of the second chamber.

Preferably the valve operating means comprise a hand wheel and thread means which convert the rotational movement of the hand wheel into a movement of the sub assembly along the longitudinal axis.

The valve operating means may further comprise a contact ball which transmits the longitudinal force of the operating wheel to the sub assembly.

The perforated plate can be a disc operated in rotation by the operating wheel.

### Brief Description of Drawings

Figure 1 corresponds to a first embodiment of the invention showing a gas valve assembly with an integrated pressure reducer and an integrated pressure relief valve.

Figure 2 corresponds to a second embodiment of the invention showing a gas valve assembly with the integration of a residual pressure valve, a pressure relief valve, a pressure reducer and a flow selector.

### Mode(s) for Carrying Out the Invention

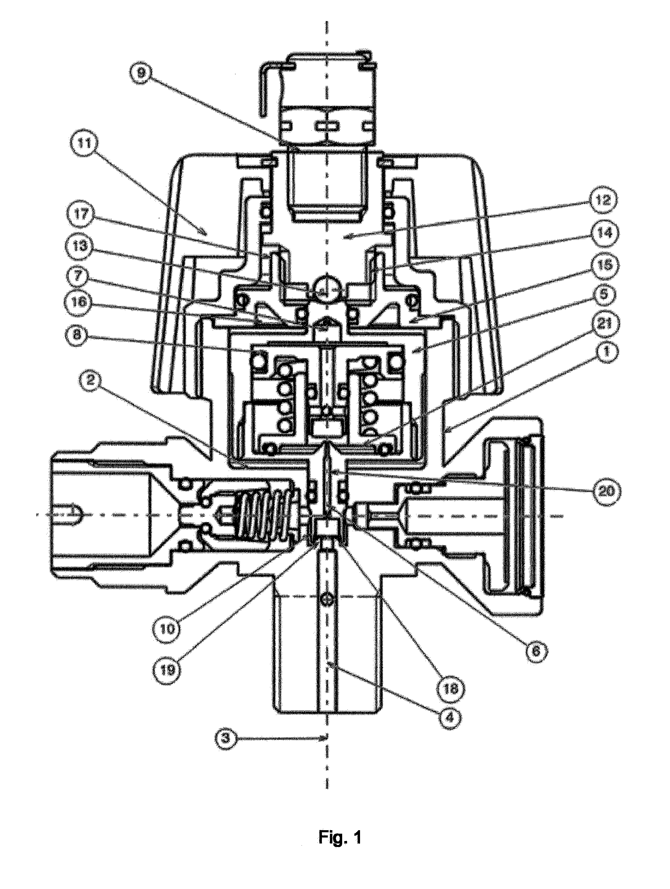

The first embodiment in figure 1 illustrates the integration of a pressure reducer and a pressure relief valve in a gas valve assembly. The valve assembly comprises a valve body 1 extending along a longitudinal axis 3. The valve body 1 is provided at its lower end with a gas inlet 4 extending along the longitudinal axis. The gas inlet could also be offset from the longitudinal axis or even non parallel to the axis. In this embodiment, the lower part of the valve body has an external thread for screwing the valve assembly on a gas bottle or tank. This type of connection is exemplary. The valve body could indeed by connected by other means. The valve body 1 is aslo provided with a cavity 2 extending along its longitudinal axis. This cavity 2 is opened to the exterior of the valve body 1 and composed, in this embodiment, of a first narrower cavity and a second adjacent broader cavity in communication with the gas inlet 4, where both of which are preferably generally cylindrical and realised by boring the valve body 1. A sub assembly 5 is engaged in the cavity 2 and able to move along the longitudinal axis 3. The sub assembly 5 comprises a protrusion 20 which sealingly engages the narrower bore, and the main body of the sub assembly engages the broader bore of the cavity. The sub assembly is a hollow unit with a gas inlet 6 and a gas outlet 7. The protrusion 20 carries a sealing element 18 of the gas shut-off valve 10 located in the flow path between the gas inlet 4 and the sub assembly inlet 6. This sealing element 18 cooperates with a valve seat 19 on the valve body in order to close the gas shut-off valve thanks to the downward movement of the sub assembly 5 within the cavity 2.

Alternatively, aA reverse seat shut-off valve could be used such that it would open by a downward movement of the sub assembly.

A manometer and a gas filling port are in fluid communication with the section of the flow path between the shut-off valve and the sealing means of the protrusion in its cavity.

The sub assembly inlet 6 is formed by a passage in the protrusion in fluid communication with the section of the gas flow path between the shut-off valve and the sealing means of the protrusion in its cavity. The inlet 6 flows in the main body of the sub assembly 5 via a regulator seat. The hollow part of the sub assembly forms a cylindrical chamber in which a pressure reducer 8 and a pressure relief valve 21 are arranged in combination. Indeed, the pressure reducer comprises a piston including a piston head and a piston rod, the piston head being in sealing engagement with the cylindrical chamber. The piston rod has a conduit which communicates with the face of the piston head opposite to the rod. This opposite face of the piston head is in direct fluid communication with the sub assembly outlet 7. The pressure relief valve 21 comprises a member including a sleeve in sealing engagement with and around the rod. The pressure relief member includes also a sealing element in the form of a plate which sealingly engages a portion of the inner surface of the chamber opposite to the piston and which comprises the regulator seat, i.e. through which the inlet flows 6. A spring is arrangement between the inner face of the piston head and the pressure relief member.

The end of the rod opposite to the piston head is provided with a sealing element which cooperates with the regulator seat for reducing or regulating the high presssure from the inlet. The sleeve of the pressure relief valve 21 by its sealing engagement with the rod and with the portion of inner surface sub assembly 5 defines an expansion chamber which communicates with the conduit of the rod and the sub assembly outlet 7 via side passages provided on the rod. This is in this expansion chamber that the pressure reduction actually takes place and that the pressure relief is operated. Indeed, in operation the gas flows from the sub assembly inlet 6 via the regulator seat, the regulating chamber, the side passages and the conduit to the sub assembly outlet 7. When the pressure at the outlet reaches a certain level, it urges the piston downwards against the spring force such that the sealing element approaches the regulator seat and restricts the flow section to a point that the resctrited flow of gas expands in the regulating chamber to the working pressure. If this pressure would go over a certain level, it would have for effect to urge the pressure relief member upwards and allow the gas to escape from the regulating chamber to the ambience. To that effect, passages (not shown) are provided at the sub assembly and the valve body walls.

The cavity 2 of the valve body 1 is closed by a cap which is here screwed on the valve body. The cavity 1 is divided in a first chamber 16 and a second chamber 17 by the member 15 which is in sealing engagement with the interior surface of the cavity, here at the level of the cap and valve body junction, and with the sub assembly at the level of the gas outlet 7. Expressed in other words, the element 15 defines with the cap of the valve body 1 the second chamber 17 which sealingly engages with the sub assembly such that its outlet 7 flows into the second chamber. Both chambers are adjacent and sealingly isolated. The first chamber 16 is in contact with the ambience. The sub assembly outlet 7 flows in the second chamber 17 which is in communication with the gas valve outlet 9. In this embodiment the member 15 is a ridig wall with sealing means slidably engaging a surface of the sub assmbly 5 but it could also be a flexible membrane or a bellows or simply sealing means between the sub assembly 5 and the interior surface of the cavity 2.

The cap sealingly engages with a rotatable element 12 along the longitudinal axis. This element 12 is linked to the hand wheel 11 and is provided with a port which constitues the gas valve outlet 9. The element 12 threadlinlgy engages with the member 15 such that its rotational movement is converted into a translational movement along the longitudinal axis. The element 12 has a recess at its lower part for receiving a portion of a contact ball 13. The contact ball 13 is also in contact with the upper surface of the sub assembly 5 for transmitting the longitudinal movement of the element 12 to the sub assembly 5. The element 12 is provided with at least one passage (not shown) between a portion of the element 12 which is in contact with the second chamber 17 and the outlet port 9.

The operating means described here above as a hand wheel could also be designed as a manual lever with a cam, electrical means, pneumatic means, or any kind of known means for actuating the sub assembly 5.

In the closed position, the sub assembly is in a low position such that the shut-off valve 10 is closed by contact of the sealing element 18 with the valve seat 19. In this position, the hand wheel has been rotated in the direction which has lowered the sub assembly until closure of the shut-off valve. The pressure regulator is then fully open and the pressure relief valve is closed. The pressure inside the sub assembly, in the second chamber 17 and at the gas valve outlet 9 is the same and corresponds to the pressure at the end user connected to the valve, if any. If no end user is connected, the pressure is the ambient one. The spring holds both the piston and the pressure refief valve at their maximum stroke against the walls of the sub assembly 5. This position is illustrated in figure 1.

When rotating the hand wheel in the direction opposite to closing, the contact ball 13 is slighlty lifted and allows the sub assembly to be lifted under the high pressure of the gas at the inlet 4. A spring could also be foreseen (not shown). From the moment where the shut-off valve 10 opens, the high pressure gas flows to the sub assembly inlet 6, to the regulating chamber and then to upper face of the piston head opposite to the rod. This high pressure urges the piston downwards against the spring. The sealing element of the rod approaches the regulator seat and restricts the flow section. The restricted flow of gas is then expanded in the expansion chamber at a reduced pressure. The gas flows then to the second chamber 17 at a reduced pressure. The position of the piston will then be regulated dependent on the pressure at the end user and the high pressure at the gas valve inlet and will, as commonly known, reduce and regulate the outlet pressure to a desired level.

If for some reasons, the pressure reducer would not function correctly such that the outlet pressure would be too high, the pressure relief element 21 will be urged upwards and allow the gas to escape to the ambient and will thereby lower the outlet pressure.

This construction is a great improvement with regard to construction simplicity. Indeed, it requires only a one axis machining of the valve body which receives the sub assembly. Additionally, the sub assembly can be assembled separately and independently.

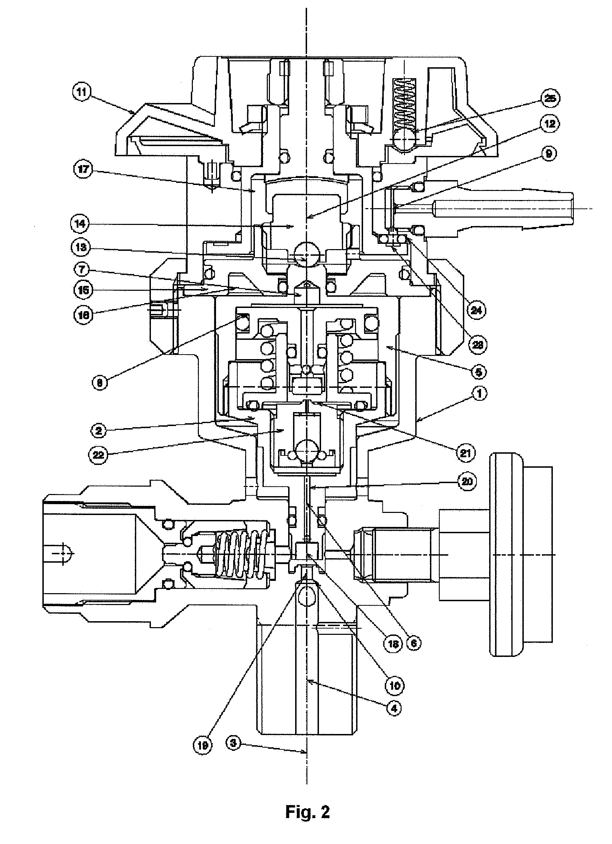

The idea underlying the second embodiment shown in figure 2 is the same as for the first embodiment. This second embodiment includes in addition a residual pressure valve and a flow selector, where a single hand wheel operates the shut-off valve and the flow selection.

Similarly to the first embodiment, the valve comprises an elongated valve body 1 with a gas inlet 4 at its lower end. A cavity 2 is provided inside the valve body 1, in this particular case as a stepped bore with three diameters. The cavity is designed this way for the sake of construction simplicity but other designs could also be considered. A sub assembly 5 slidably engages the cavity 2. Here, the sub assembly is longer since it comprises in addition to a pressure reducer 8 and a pressure relief valve 21 (as in the first embodiment) a residual pressure valve 22 located in the flow path bewteen the sub assembly inlet 6 and the group of pressure reducer and pressure relief valve. This residual pressure valve 22 is designed like a check valve which requires a certain level of pressure to open under the pressure force. In this particular case, it is designed as a ball urged by a spring against a seat, the gas being allowed to flow only from one side of the seat to its other side contacting the ball. The purpose of this valve is to avoid contamination by ambient air of the tank, bottle or device connected to the gas inlet 4 of the valve. Indeed, in the absence of such a valve, when the pressure at the inlet of the valve is very low (for example, when the tank or bottle is empty) and the shut-off valve is left open (for example under the force of spring which is not illustrated) with the outlet left free to ambient, the inlet is in communication with the ambient which could, on a medical prespective, contaminate the bottle, tank or device connected to the inlet of the gas valve. The presence of the residual pressure valve maintains the inlet isolated from the outside when not there is no flow of gas which is the situation where the contamination could occur.

Similarly to the first embodiment, the element 15 separates the cavity 2 in a first chamber 16 and a second chamber 17, the second chamber being sealingly isolated from the first one, and the sub assembly outlet flowing in the second chamber. Unlike in the first embodiment, the second chamber 17 comprises a flow selection disk positioned in front of an aperture 24 of the chamber which connects the gas valve outlet 9 to the chamber 17. This disk has a series of restrictions of different sizes or shapes which can be selectively positioned in front of the aperture 24 to thereby restrics the flow of gas and control the flow rate. A gasket is provided between the disk 23 and the aperture 24 for avoid gas to bypass the restriction. This disk is held by a sleeve which cooperates with the hub of the hand wheel.

The hand wheel is provided with a spring ball mechanism for providing an indexing of the disk. For construction reasons, the hub of the hand wheel only rotates, i.e. does not longitudinaly moves. It engages the element 12 in rotation but not in translation in order to transmits its rotational movement to the threaded means which otherwise translate upon rotation.

The flow adjustement could also be carried out by other means than a disk, for example by a continuous system.

Irrespective of the first or second embodiment, the pressure reducer using the piston principle could be replaced by a pressure reducer using the bellows principle, for example if the chemical and/or temperature conditions do not allow the use of elastomers. In this case, the sealed engagement between the inner wall of the sub assembly 5 and the gasket of the piston is replaced by a bellows sealed with the piston.

## Claims

1. A gas valve assembly comprising
- a valve body (1) with a cavity (2) extending along a longitudinal axis (3) of the valve body (1),
- a valve inlet (4) on the valve body (1),
- a hollow sub assembly (5) located in the cavity (2) and able to move along the longitudinal axis (3), the sub assembly (5) being provided with an inlet (6) and an outlet (7) and comprising a pressure reducer (8) in communication with the sub assembly inlet (6) and outlet (7),
- a valve outlet (9) in communication with the sub assembly outlet (7),
- a gas shut-off valve (10) fluidly interposed between the valve inlet (4) and the sub assembly inlet (6), the gas shut-off valve being operated by the movement of the sub assembly (5),
- valve operating means (11,12,13,14) able to move the sub assembly (5) for operating the gas shut-off valve (10),
**characterised in that** the gas valve assembly further comprises
means (15) for dividing the cavity (2) in a first chamber (16) and an adjacent second chamber (17) isolated from the first chamber (16) in a sealed way and such that the sub assembly outlet (7) flows in the second chamber (17), and the valve outlet (9) is provided on the valve body (1) in communication with the second chamber (17).

2. A gas valve assembly according to the preceding claim, wherein the sub assembly (5) is provided with a first element (18) of the gas shut-off valve (10) which during operating is able to come into sealed contact with a second element (19) of the gas shut-off valve for thereby shutting off valve.

3. A gas valve assembly according to the preceding claim, wherein the first element (18) is a sealing element and the second element (19) is a valve seat or vice versa.

4. A gas valve assembly according to the one of the preceding claims, wherein the sub assembly (5) comprises a protrusion (20) at its lower end along the longitudinal axis (3) which engages the cavity (2) of the valve body and, preferably, at the end of which the first element (18) of the shut-off valve (10) is provided.

5. A gas valve assembly according to one of the preceding claims, wherein the sub assembly (5) contains a pressure relief valve (21).

6. A gas valve assembly according to the preceding claim, wherein the pressure reducer (8) comprises a piston including a piston head and a piston rod, the piston head being in sealing engagement with interior of the sub assembly, the piston rod having a conduit in communication with the opposite side of the piston, the end of the piston rod opposite to the piston being provided with a regulator seat for sealing the sub assembly inlet; the pressure relief valve (21) comprises a member with a sleeve in sealing engagement with the piston rod; and spring means acting between the piston and the pressure relief valve (21).

7. A gas valve assembly according to any of the preceding claims, wherein the sub assembly (5) contains a residual pressure valve (22) arranged in series and upstream of the pressure reducer (8).

8. A gas valve assembly according to any of the preceding claims, wherein the gas valve assembly further comprises a flow adjusting means (23, 24) arranged in the second chamber (17) for adjusting the gas flow at the gas valve outlet (9).

9. A gas valve assembly according to the preceding claim, wherein the flow adjusting means (23, 24) are operated by the valve operating means operating the gas shut-off valve (10).

10. A gas valve assembly according to the preceding claim, wherein the flow adjusting means comprise a plate (23), preferably in the form of a disk or a ring, perforated with several openings of different sizes and displaceable with regard to an outlet aperture (24) of the second chamber (17).

11. A gas valve assembly according to any of the preceding claims, wherein the valve operating means comprise a hand wheel (11) and thread means (14) which convert the rotational movement of the hand wheel (11) into a movement of the sub assembly (5) along the longitudinal axis (3).

12. A gas valve assembly according to the preceding claim, wherein the valve operating means further comprise a contact ball (13) which transmits the longitudinal force of the operating wheel (11) to the sub assembly (5).

13. A gas valve assembly according to claims 10 and 11 or 10 and 12, wherein the perforated plate is a disc (23) operated in rotation by the operating wheel (11).
